# EUROPEAN PATENT APPLICATION

(11) **EP 3 584 472 A1**
(43) Date of publication of application: **25.12.2019**
(21) Application number: 18178804.3
(22) Date of filing: 20.06.2018
(51) Int. Cl.: F16J 15/34

(54) **A MECHANICAL SEAL ARRANGEMENT FOR A FLOW MACHINE**

(71) Applicant: Sulzer Management AG, 8401 Winterthur (CH)
(72) Inventor: Vainikainen, Jukka, 48601 Kotka (FI); Posa, Atte, 48601 Kotka (FI)
(74) Representative: Intellectual Property Services GmbH

(57) **Abstract**

The present invention relates to a mechanical seal having a rotary part and a non-rotary part, the rotary part having at least a rotary slide ring (24) and a rotary slide ring carrier (22), and the non-rotary part (32) having at least a non-rotary slide ring (36) and a non-rotary slide ring carrier (34), wherein the mechanical seal is provided with means (50) for introducing lubrication liquid to a position radially outside the slide rings (24, 36).

## Description

### Technical field

The present invention relates to a mechanical seal arrangement in accordance with the preamble of claim 1.

### Background art

Mechanical seals are gaining more and more acceptance in various shaft sealing applications. The mechanical seals find use in various pumps, mixers and agitators. Mechanical seals are of relatively simple construction, they endure high temperatures and their maintenance and service is relatively easy. But, just like all kinds of seals, their lifetime is hard to predict. It is also quite impossible to perform any visual monitoring of the condition of the seal. Therefore, prior art includes numerous documents that discuss the monitoring of the condition of a mechanical seal. Since the most frequent reason leading to the deterioration of the mechanical seal is the failing of lubrication, the prior art also proposes ways to ensure lubrication of the seal surfaces.

US-A-6,065,345 discusses a method of monitoring the condition of a mechanical seal in a pump, which has a rotating shaft and an impeller for the forwarding of a fluid. In such a pump the sound emission of the seal is continually measured at discrete times in the operating state of the apparatus and at least one statistical characteristic value is won from the acoustic signals. The goal in the above discussed patent is to monitor the sliding condition of the seal. In other words, if the seal is starting to run dry, i.e. the flushing or lubrication is, for some reason, not working properly, the acoustic emission from the seal changes with the condition of the lubricating film. The US- patent discusses also the effect of the speed of rotation of the pump, the temperature of the flushing liquid, the pressure of the liquid to be pumped, etc. to the acoustic emission of the seal, whereby the acoustic emission may change even if the sliding conditions were not changed.

EP-B1-2362122 discusses a single acting mechanical seal in which one of the slide rings is provided with at least one channel opening within the seal gap. The channel conducts lubricating liquid to the seal gap depending on monitored operating conditions, in order to optimize the operating behavior of the seal. The delivery device, which is configured as a micro pump for delivering the lubricating liquid, is integrated into the mechanical seal, an outlet side of the delivery device being connected to the channel, and an inlet side of the delivery device being connected via a further channel to a liquid-filled space, the liquid source. The operating parameter used for controlling the operation of the micro pump is taught to be one of the pump pressure, the temperature of the fluid to be pumped, the temperature near the seal gap, the rotational speed of the shaft of the pump, the vibration of the sealing arrangement, and the leakage of the mechanical seal.

In other words, the above cited prior art discusses abnormal operating conditions in which the lubrication of the mechanical seal surfaces has failed or is about to fail. The latter one of the above discussed patent documents teaches that a solution to the failing lubrication is taking lubricating liquid directly into the seal gap via a channel provided in one of the slide rings and the sealing surfaces. The document further teaches that for the delivery of the liquid the slide ring is provided with a micro pump. The taught construction has, however, several problems or disadvantages. Firstly, normal wear of the surfaces, i.e. when the additional lubrication is not functioning, causes minor particles to loosen from the sliding surfaces. Now that there is a channel in the sliding surface the particles collect easily in the channel blocking it such that when lubrication is needed the channel is at least partially blocked whereby the lubrication does not work in the manner it was supposed to work. Secondly, providing flow channels and a micro pump in a slide ring is complicated and makes the production of the slide ring expensive. Standard slide rings cannot be used. Thirdly, leading liquid to a slide ring requires sophisticated piping still adding to the costs of the sealing.

An object of the present invention is, thus, to solve at least one of the above discussed problems.

Another object of the present invention is to increase the reliability of the operation of a mechanical seal.

Yet another object of the present invention is to introduce a mechanical seal arrangement having improved reliability but still using standard sealing components.

Still another object of the present invention is to introduce a mechanical seal arrangement that may be installed in place of an older seal arrangement.

### Disclosure of the Invention

At least one of the objects of the present invention is met substantially as is disclosed in the independent claims and in the other claims describing more details of different embodiments of the invention.

According to an embodiment of the present invention a mechanical seal arrangement has a rotary part and a non-rotary part, the rotary part being formed at least of a rotary slide ring carrier with a rotary slide ring, and the non-rotary part being formed at least of a non-rotary slide ring carrier with a non-rotary slide ring and a seal body, the rotary slide ring and the non-rotary slide ring leaving therebetween a seal gap, wherein the mechanical seal arrangement is provided with means for introducing lubrication liquid to a position radially outside the slide rings.

The mechanical seal arrangement of the present invention brings about at least some of the following advantages
- the reliability of a mechanical seal is considerably improved,
- standard seal components,
- no expensive modifications to the sliding rings or to any other parts of the seal belonging to a service kit,
- simple components to be added in the flow machine, and
- not only for new flow machine constructions, easy to add in existing flow machines as in some cases no modifications to the flow machine are needed.

The exemplary embodiments of the invention presented in this patent application are not to be interpreted to pose limitations to the applicability of the appended claims. The verb "to comprise" is used in this patent application as an open limitation that does not exclude the existence of also non-recited features. The features recited in depending claims are mutually freely combinable unless otherwise explicitly stated. The novel features which are considered as characteristic of the invention are set forth in particular in the appended claims.

### Brief Description of Drawings

In the following, the mechanical seal arrangement of the present invention will be described in more detail with reference to the accompanying exemplary, schematic drawings, in which
Figure 1 is a general representation of a prior art single acting mechanical seal arranged in connection with a flow machine,
Figure 2 illustrates a partial cross section of the mechanical seal arrangement in accordance with a first preferred embodiment of the present invention,
Figure 3 illustrates a partial cross section of the mechanical seal arrangement in accordance with a second preferred embodiment of the present invention,
Figure 4 illustrates a partial cross section of the mechanical seal arrangement in accordance with a third preferred embodiment of the present invention,
Figure 5 illustrates a partial cross section of the mechanical seal arrangement in accordance with a fourth preferred embodiment of the present invention, and
Figure 6 illustrates a partial cross section of the mechanical seal arrangement in accordance with a fifth preferred embodiment of the present invention.

### Detailed Description of Drawings

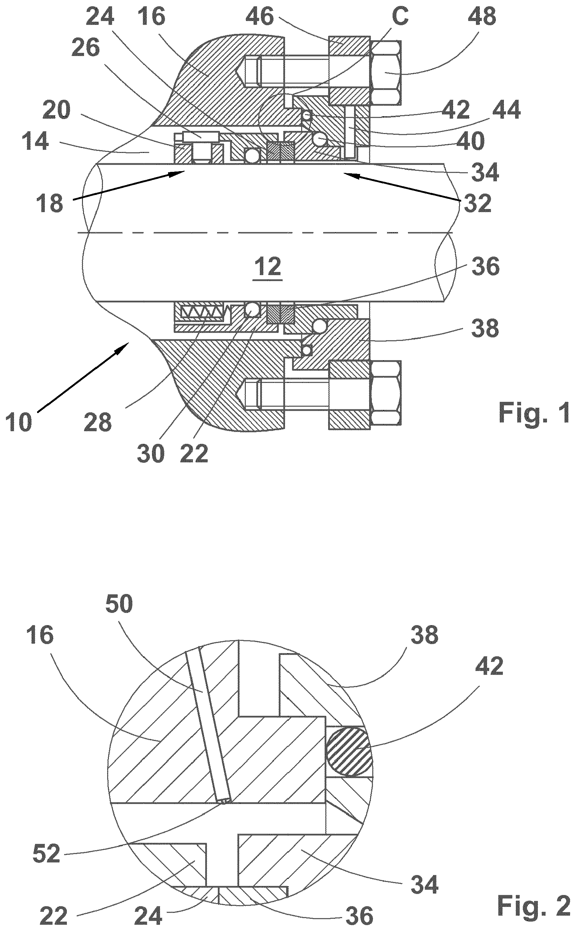

Figure 1 illustrates schematically and exemplarily a single-acting prior art mechanical seal arrangement 10. The mechanical seal 10 is used for sealing the shaft 12 of, for instance, a flow machine such that the interior of the flow machine, at the left hand side of the seal, is kept separate from the atmosphere, at the right hand side of the seal. The mechanical seal 10 is positioned in a seal chamber 14 provided within a specific seal housing 16 or within a casing cover of a flow machine.

In accordance with Figure 1 the prior art mechanical seal arrangement 10 comprises a rotary part 18 and a non-rotary part 32. The rotary part 18 comprises a retainer ring 20, a rotary slide ring carrier 22, a rotary slide ring 24, at least one set screw 26, one or more springs 28 and an O-ring 30. The non-rotary part 32 comprises a non-rotary slide ring carrier 34, a non-rotary slide ring 36, a body part 38, O-rings 40 and 42, at least one drive pin 44, a gland ring 46 and bolts 48. The seal is assembled on the shaft 12 such that the retainer ring 20 including the at least one spring 28 is fastened on the shaft 12 at an appropriate position by means of the at least one set screw 26. Next the rotary slide ring carrier 22 with the rotary slide ring 24 is pushed on the shaft 12 against the at least one spring 28 such that the rotary slide ring carrier 22 remains floating on the shaft 12 by means of the support of the O-ring 30. The rotary slide ring carrier 22 is provided at its axial end opposite the rotary slide ring 24 with at least one opening or at least one axial recess for receiving the at least one set screw 26 for forcing the slide ring and its carrier 22 rotate along with the shaft 12. Then the non-rotary slide ring 36 with its carrier 34 and the body part 38 with its O-rings 40 and 42 are installed on the shaft 12 to the support of the seal housing 16, and fastened thereto by means of the gland ring 46 and the bolts 48. The rotation of the non-rotary slide ring 36 and its carrier 34 with the rotary slide ring 24 is prevented by means of at least one drive pin 44 extending from the body part 38 to an opening or recess in the non-rotary slide ring carrier 34.

Figure 1 has a circle C showing the position where the various embodiments of the present invention are located in the improved mechanical seal arrangement discussed more closely in Figures 2 through 6.

Figure 2 illustrates a partial cross section of the mechanical seal arrangement in accordance with a first preferred embodiment of the present invention. In accordance with the first preferred embodiment of the present invention the seal housing 16 is provided with at least one feed conduit 50 for introducing lubrication liquid to the seal arrangement. The at least one feed conduit 50 is directed towards the non-rotary slide ring 36. In other words, the feed conduit 50 opens radially outside the slide rings 24 and 36 such that the liquid jet from the at least one feed conduit 50 cleans any impurities from the non-rotary slide ring 36 and introduces lubricating liquid to the seal gap between the rotary and non-rotary slide rings 24 and 36. The at least one feed conduit 50 may be dimensioned or provided with a throttling or nozzle 52 at its end terminating in the inner surface of the seal housing 26 such that a jet of liquid sufficient for cleaning the non-rotary slide ring 36 is created.

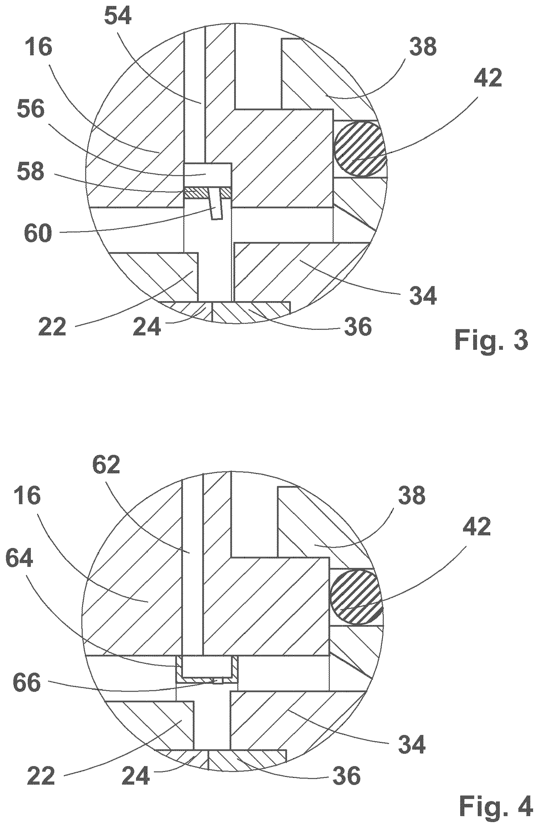

Figure 3 illustrates a partial cross section of the mechanical seal arrangement in accordance with a second preferred embodiment of the present invention. In accordance with the second preferred embodiment of the present invention the seal housing 16 is provided with at least one feed conduit 54 for introducing lubrication liquid to an annular header 56 provided in the seal housing 16. The annular header 56 is provided with a closing ring 58 having at least one opening or nozzle 60 located radially outside the slide rings 24 and 36, and directed towards the non-rotary slide ring 36 such that the liquid jet from the at least one opening or nozzle cleans any impurities from the non-rotary slide ring 36 and introduces lubricating liquid to the seal gap between the rotary and non-rotary slide rings 24 and 36.

Figure 4 illustrates a partial cross section of the mechanical seal arrangement in accordance with a third preferred embodiment of the present invention. In accordance with the third preferred embodiment the present invention the seal housing 16 is provided with at least one feed conduit 62 for introducing lubrication liquid to an annular header 64 provided on the inside surface of the seal housing 16. The annular header 64 is provided with at least one opening or nozzle 66 located radially outside the slide rings 24 and 36, and directed towards the non-rotary slide ring 36 such that the liquid jet from the at least one opening or nozzle 66 cleans any impurities from the non-rotary slide ring 36 and introduces lubricating liquid to the seal gap between the rotary and non-rotary slide rings 24 and 36.

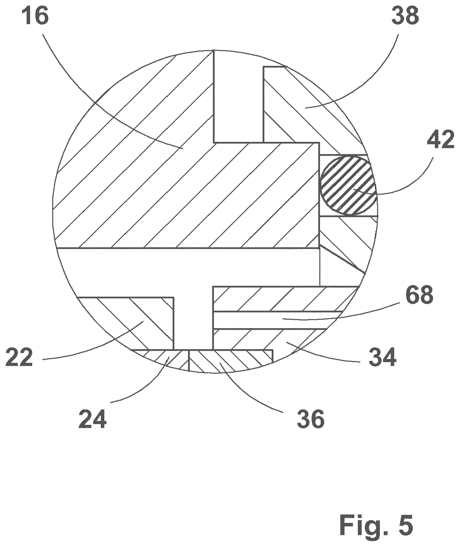

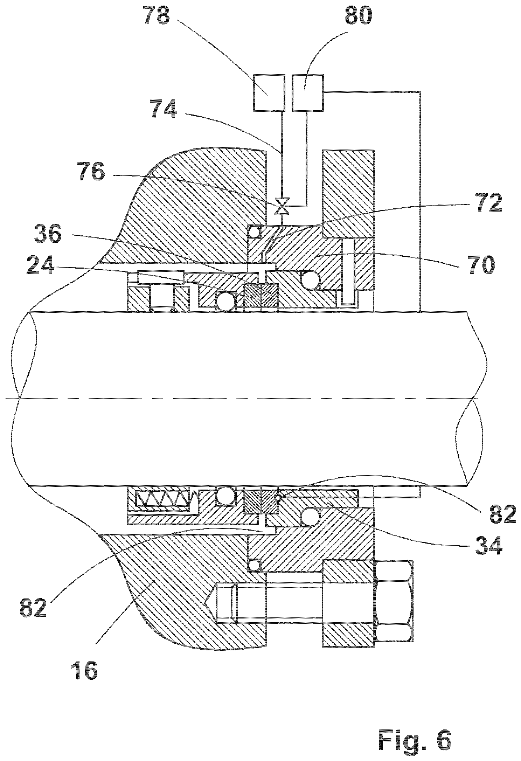

Figure 5 illustrates a partial cross section of the mechanical seal arrangement in accordance with a fourth preferred embodiment of the present invention. In accordance with the fourth preferred embodiment of the present invention the lubricating liquid is introduced radially outside the slide rings and to the seal gap between the rotary and non-rotary slide rings 24 and 36 along at least one feed conduit 68 provided in the non-rotary slide ring carrier 34. The end of the feed conduit 68 terminating radially outside the non-rotary slide ring 36 may, if desired, be provided with a nozzle directing the lubricating liquid more accurately towards the seal gap. Also, if desired, the non-rotary slide ring carrier 34 may be provided at its end facing the rotary slide ring carrier 22 with a header similar to that shown in Figures 3 and 4 so that only one feed conduit in the non-rotary slide ring carrier 34 is needed. Naturally, the introduction of lubrication liquid from the source of liquid to the feed conduit 68 may be performed as shown later on in connection with Figure 6.

Figure 6 illustrates a partial cross section of the mechanical seal arrangement in accordance with a fifth preferred embodiment of the present invention. In accordance with the fifth preferred embodiment of the present invention the seal body 70 supporting the non-rotary slide seal carrier 34 is made to extend farther towards the rotor of the flow machine to the left. This kind of construction makes it possible to arrange the at least one feed conduit 72 for the lubrication liquid to the seal body 70 such that the feed conduit 72 opens radially outside the rotary and non-rotary slide rings 24 and 36. Thereby no feed conduits or any other changes are needed in the seal housing 16. Another way to arrange the feed conduit in the seal body is to arrange the feed conduit extend in more or less axial direction in the seal body from the end of the seal body opposite the slide rings 34 and terminate in an opening or nozzle in the inner surface of the seal body radially outside the slide rings.

Figure 6 also shows as an additional feature that may be applied to any embodiment of the present invention, i.e. the actual arrangement for feeding the lubrication liquid to the seal. The feeding arrangement comprises, in addition to the feed conduit 72 (or feed conduits 50, 52 and 60 of the other embodiments) a feed pipe 74, a valve 76, a source 78 for lubrication liquid (normally clean water), a control unit 80 and at least one sensor 82. The valve 76 is, thus, on the one hand, connected in the feed pipe between the feed conduit in the seal housing or seal body and the liquid source, an on the other hand, to a control unit 80 that receives control information from at least one acoustic sensor 82 arranged in connection with the flow machine. In this specific embodiment the acoustic sensor 82 is arranged in connection with the non-rotary slide ring carrier 34. In accordance with a preferred, but not the only, option the acoustic sensor is arranged between the non-rotary slide ring 36 and its carrier 34, for which purpose the non-rotary slide ring carrier 34 is provided with a hole taking electric wiring to the sensor 82 to the backside of the non-rotary slide ring 36. This is the position where the sensor 82 senses best the changes in the behaviour of the slide ring 36, and is best able to measure the acoustic wave through the slide surface and the lubricating layer. The control unit 80 is taught to send the valve 76 a command to open a flow communication between the liquid source and the seal when the acoustic input from the sensor/s 82 exceeds a predetermined value. The valve 76 may be kept open until the acoustic input from the sensor/s 82 decreases below a predetermined value (same or different than the value used for opening the valve) or after the valve 76 has been kept open for a certain period of time.

As to the introduction of lubricating or flushing liquid to the seal it is performed preferably along 1 to 10 feed conduits or nozzles. As shown earlier a single feed conduit in the seal housing is sufficient if an annular header is provided in the seal housing or on the inner surface of the seal housing. In a similar manner the header may also be provided in the seal body, in the non-rotary slide ring carrier, on the inner surface of the seal body or on the end surface of the non-rotary slide ring carrier, i.e. the header constructions of Figures 3 and 4 may be applied to the embodiments of Figures 5 and 6. Furthermore, the outside of the seal housing, the seal body or the non-rotary slide ring carrier may be provided with a header for dividing the lubrication liquid received along a single pipe and valve from the liquid source to several feed conduits arranged in the seal housing or seal body.

With regard to the above description and the embodiments disclosed therein it should be understood that the single acting mechanical seal arrangement has been discussed as a preferred example only. The mechanical seal arrangement of the present invention is, however, applicable in connection with double acting mechanical seals, too.

It should also be understood that any appropriate sensor, like for instance an acoustic emission sensor, a temperature sensor, an acceleration sensor or a vibration sensor, just to name a few alternatives, may be positioned in any such location or position where it is capable of collecting information from the condition of the slide ring/s or their lubrication. In other words, such a sensor may not only be arranged in direct connection with the slide ring or slide ring carrier but also in the wall of the seal housing, in the cover of the pump or mixer casing or in the flange used for fastening the sealing to the flow machine, just to name a few alternatives without any indication to limit the invention to the listed options.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A mechanical seal arrangement, the mechanical seal arrangement (10) having a rotary part (18) and a non-rotary part (32), the rotary part (18) being formed at least of a rotary slide ring carrier (22) with a rotary slide ring (24), and the non-rotary part (32) being formed at least of a non-rotary slide ring carrier (34) with a non-rotary slide ring (36) and a seal body (38; 70), the rotary slide ring (24) and the non-rotary slide ring (36) leaving therebetween a seal gap, **characterized in** means (50, 52; 54, 56, 58, 60; 62, 64, 66; 68; 72) for introducing lubrication liquid to a position radially outside the slide rings (24, 36).

2. The mechanical seal arrangement as recited in claim 1, **characterized in** the lubrication liquid introduction means being at least one feed conduit (50; 54; 62; 68; 72), the at least one feed conduit (50; 54; 62; 68; 72) being via a valve (76) in flow communication with a source (78) of lubrication liquid.

3. The mechanical seal arrangement as recited in claim 1, **characterized in** the lubrication liquid introduction means being at least one feed conduit (68) arranged in the non-rotary slide ring carrier (34).

4. The mechanical seal arrangement as recited in claim 1, **characterized in** the lubrication liquid introduction means being at least one feed conduit (72) arranged in the seal body (70) of the mechanical seal arrangement.

5. The mechanical seal arrangement as recited in claim 1, **characterized in** the mechanical seal arrangement being arranged within a seal housing (16) of a flow machine, the lubrication liquid introduction means being at least one feed conduit (50; 54; 62) arranged in the seal housing (16) of the flow machine.

6. The mechanical seal arrangement as recited in any one of the preceding claims, **characterized in** a header (56; 64) arranged in flow communication with the at least one feed conduit (54; 62; 68; 72).

7. The mechanical seal arrangement as recited in claim 6, **characterized in** the header arranged in connection with the end of the non-rotary slide ring carrier (34) facing the rotary slide ring carrier (22).

8. The mechanical seal arrangement as recited in claim 6, **characterized in** the header (56; 64) being arranged in connection with an internal surface of the seal housing (16).

9. The mechanical seal arrangement as recited in claim 6, **characterized in** the header being arranged in the seal body (70) or on an inner surface of the seal body (70).

10. The mechanical seal arrangement as recited in any one of the claims 6 - 9, **characterized in** the header (56; 64) being provided with openings or nozzles (52; 60; 66) for spraying the lubrication liquid.

11. The mechanical seal arrangement as recited in claim 2, **characterized in** the valve (76) being controlled by means of a control unit (80), the control unit (80) being in communication with at least one sensor (82) collecting information from the operation of the mechanical seal arrangement.

12. The mechanical seal arrangement as recited in claim 11, **characterized in** the sensor (82) being one of an acoustic sensor, a temperature sensor, a vibration sensor and an acceleration sensor.

13. The mechanical seal arrangement as recited in claim 11 or 12, **characterized in** the at least one sensor (82) being arranged in connection with one of the non-rotary slide ring carrier (34), a seal housing (16), the seal body (38; 70), a cover of a pump or a mixer casing or a flange by means of which the mechanical seal is fastened to a flow machine.

14. The mechanical seal arrangement as recited in claim 6, **characterized in** the header being arranged outside of the seal housing (16) or of the seal body (70).

15. The mechanical seal arrangement as recited in claim 14, **characterized in** the header being provided between the valve and the feed conduits arranged in the seal housing (16), in the seal body (70) or in the non-rotary slide ring carrier (34).
